# EUROPEAN PATENT APPLICATION

(11) **EP 0 812 730 A1**
(43) Date of publication of application: **17.12.1997**
(21) Application number: 97109336.4
(22) Date of filing: 10.06.1997
(51) Int. Cl.: B60R 9/055, B60P 3/34, E05F 1/12, B60J 7/16

(54) **A mechanism for connecting two parts which are movable in relation to each other**

(30) Priority: 11.06.1996 NO 962462
(71) Applicant: HTS Styling as, 3013 Drammen (NO)
(72) Inventor: Walter, Christian P., 1730 Ise (NO)
(74) Representative: Thielmann, Andreas

(57) **Abstract**

A mechanism for connecting two parts (1, 2) which are movable in relation to each other comprises at least two pairs of link arms (10, 20), where each pair of link arms comprises two link arms (11, 12) provided at a distance apart from each other. The link arms (11, 12) in at least one of the pairs of link arms (10) are rigidly interconnected with at least one transverse section (17). In a preferred embodiment the link arms (11, 12) are rigidly interconnected with the transverse section (17) at the link arms' first ends (13, 15) and/or second ends (14, 16), the transverse sections (17) and the link arms (11, 12) thus together forming a U-shaped or channel-shaped hoop or a substantially rectangular frame respectively.

## Description

The invention concerns a mechanism for connecting two parts which are movable in relation to each other, comprising at least two pairs of link arms, wherein each pair of link arms comprises two link arms provided at a distance apart from each other, the first end of which is attached to one part by rotating fastenings for rotation about a common first axis, and the second end of which is attached to the second part by rotating fastenings for rotation about a common second axis parallel to the first axis.

A number of different mechanisms are known for securing an upper part in relation to a bottom part, and for raising the upper part in relation to the bottom part. The area of application is particularly various lid structures, such as lids on containers and freight boxes. Other areas of application comprise roof structures, such as raisable roofs on boats, cars and caravans.

A simple form of such a mechanism is hinges. More sophisticated mechanisms include different arrangements of arms, springs and possibly cylinders.

Roof boxes for cars can be hinged along one of the sides of the box with a lock on the other side. Roof boxes are also known with hinges which can also be opened and act as locks, thus enabling the roof box to be opened on both sides.

DE 39 00 455 C2 describes a roof box for a car, comprising a bottom and a lid, where the lid is hinged to the bottom at one end of the bottom. A cylinder/link arm mechanism in the front of the roof box controls the lid during its movement.

WO 90/06867 describes a roof box for a car, comprising a bottom and a lid, where two link arms rotatably attached to the bottom and the lid on each of the sides of the roof box make it possible to raise the lid from a closed to an open position. A piston mechanism pushes the lid up and ensures that it does not move beyond a certain position.

Known mechanisms for securing an upper part in relation to a bottom part, and for raising the upper part in relation to the bottom part work well per se when they are correctly designed and dimensioned with regard to strength and user friendliness. When using thin, light and reasonably priced structures in the upper part and the bottom part, however, factors related to the stability of the parts must also be taken into consideration, and in this respect existing mechanisms have proved to be inadequate.

The object of the invention is to provide a mechanism for connecting two parts which are movable in relation to each other, wherein the forces which come into play during the use of the mechanism are transferred between the mechanism and the two parts without generating invidious bending or twisting moments in the mechanism's attachment devices, thus enabling the two parts to be made in a thin, light and consequently partially flexible material, such as thin thermoplastic.

This object is achieved in relation to the invention with a mechanism of the type mentioned in the introduction, characterized by the features which are stated in the claims.

The invention thus consists in a mechanism which comprises at least two pairs of link arms, wherein each pair of link arms comprises two link arms provided at a distance apart from each other. The ends of the link arms are each rotatably attached to its own part for rotation about parallel axes. The novel and characteristic feature of the invention is that the link arms in at least one of the pairs of link arms are rigidly interconnected with at least one transverse section.

The term "parts" should be understood to refer to rigid or semi-rigid, partially flexible elements. The invention is not intended to cover hoods or other fabric constructions.

The term "pair of link arms" should be understood to refer to a pair of parallel and equally long link arms, each end of which can be rotatably attached to its own part.

When a pair of link arms of a known, non-connected type is used to connect two rigid parts, the movement of the two link arms will be parallel, with the result that one end of the two link arms will rotate about a common first axis, while the second ends of the two link arms will rotate about a common second axis, parallel to the first axis.

When a pair of link arms of a known, non-connected type is used to connect two flexible or semi-rigid parts, however, due to different forces which can act on the parts, the ends of the link arms will be easily moved in relation to each other, with the result that they no longer rotate about common or parallel axes. The movement of the two parts thereby becomes indeterminate, and the stresses on the link arms' rotating fastenings and their attachment in the parts can become enormous due to undesirable twisting moments which will act in the attachment devices.

By connecting the two link arms with a transverse section according to the invention, the pair of link arms becomes a rigid structural member which will stiffen the two parts. The parallel movement of the link arms is thereby maintained, and, even though the parts are made of a flexible material, the link arms' attachment is not exposed to the said severe twisting moments.

In a general form of the invention the transverse section may be of any shape, for example in the form of a beam which is placed in the middle of the link arms, so that the pair of link arms are in the form of an H.

In a number of applications of the invention, especially where the two parts form the lid and bottom of a box structure, however, it is preferable that the transverse section should cause the least possible obstruction to access to the space between the lid and the bottom. The transverse section can therefore be advantageously placed in one end of the link arms, so that the pair of link arms form a U-shaped or channel-shaped hoop. The link arms may also be connected to transverse sections at both ends of the link arms, so that the pair of link arms are in the shape of a flat, substantially rectangular frame.

The invention will now be explained in more detail in connection with a description of a specific embodiment and advantageous features, and with reference to the drawing, in which
- figs. 1 a-c: illustrate the mechanism according to the invention employed in a roof box for a car, where the roof box is shown in a side view.
- figs. 2 a,b: are a cross section of the roof box in fig. 1 along the section line II-II.
- fig. 3: illustrates a spring for pushing up the roof box in fig. 1, and
- figs. 4 and 5: illustrate alternative designs of the mechanism according to the invention.

The same reference numerals are employed for corresponding parts in all the figures.

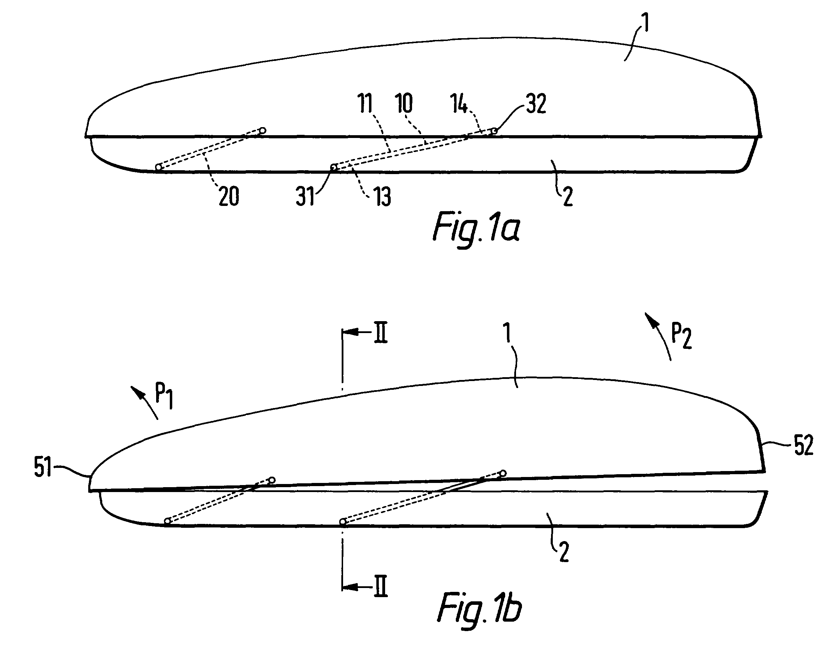

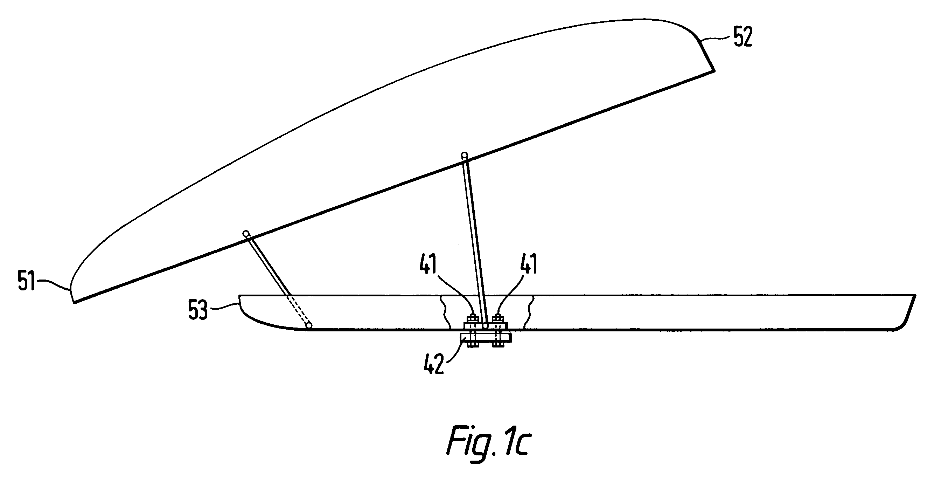

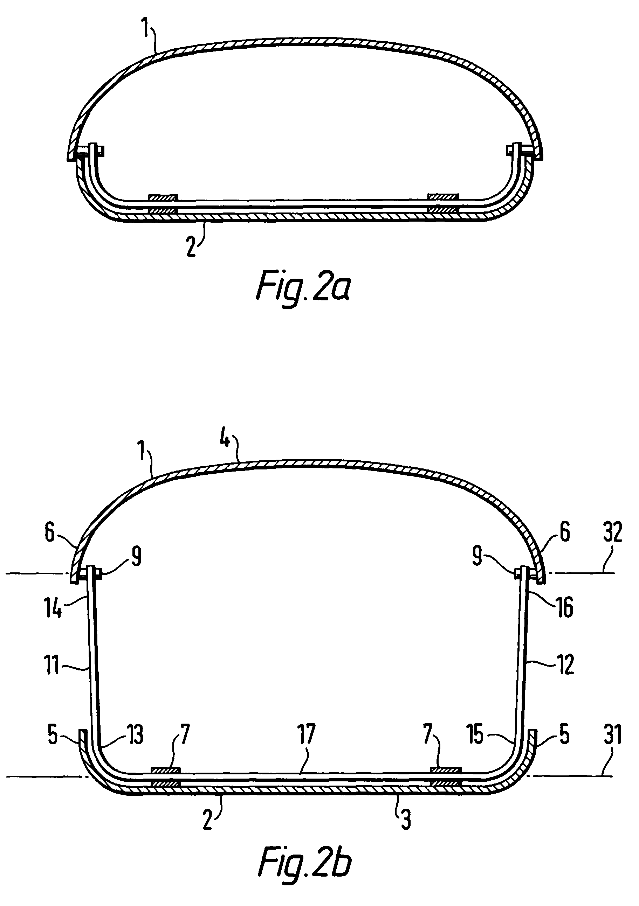

Fig. 1a shows a roof box in a closed position, while figs. 1b and 1c show the roof box in a half-open and open position respectively. Figs. 2a and 2b are a cross section of the roof box in fig. 1 along the section line II-II, for a closed and an open position respectively.

The roof box consists of two parts in the form of a lid 1 and a bottom 2, which are composed respectively of a curved plate 4 with lateral edges 6, and a flat plate 3 with lateral edges 5. The lid and the bottom are held together by two pairs of link arms, a rear pair of link arms 10 and a front pair of link arms 20. The pairs of link arms are alike in principle, and the detailed description of the pairs of link arms is therefore limited to the rear pair of link arms, on the understanding that a similar description also applies to the front pair of link arms.

The rear pair of link arms 10 consists of two link arms 11, 12, first ends 13, 15 of which are rotatably attached to the bottom 2 for rotation about an axis 31, and second ends 14, 16 of which are rotatably attached to the lid 1 for rotation about an axis 32. The axes 31 and 32 are parallel, thus enabling the lid to be raised from the bottom by means of the link arms. The link arms are rigidly connected to a transverse section 17, with the result that the link arms will be rotated equally during lifting of the lid. The lid thereby obtains an even movement where forces are transferred from the lid to the link arms and on to the bottom without the occurrence of any undesirable twisting moments in the rotating fastenings and their attachment devices. The link arms are illustrated by solid lines, but it should be understood that in a preferred embodiment the link arms will be located inside the roof box.

In the illustrated embodiment the transverse section 17 is placed between the first ends 13, 15 of the link arms, the transverse section and the link arms thus forming a hoop. The hoop is formed from a continuously elongated element in the form of a tube, and the rotating attachment of the link arms in the bottom 2 is in the form of rotating fastenings 7 with sleeve-shaped sections arranged on the outside of that part of the tube which constitutes the transverse section 17.

Second ends 14, 16 of the link arms are attached to the lid 1 by rotating fastenings 9 of a different type to the rotating fastenings 7, since in this case the link arms are directly attached to the rotating fastenings.

As illustrated in fig. 1c, the rotating fastenings in the bottom of the roof box are attached by through-going screws 41. The through-going screws are passed through the bottom of the roof box and attached to a load-bearing section of the car, such as a load bearer or a roof rack 42. This attachment is particularly advantageous for the rear pair of link arms, since by means of its position approximately in the middle of the lid of the roof box it will transfer the greater part of the lid's specific weight and any snow and wind load directly to the car, without loading the bottom. In the illustrated embodiment two pairs of link arms are employed where the rotating fastenings in the lid are located at approximately regular intervals along the length of the lid, thus giving the best possible distribution of the forces which the link arms exert on the lid.

The link arms in the front pair of link arms are shorter than the link arms in the rear pair of link arms, with the result that when raised the lid 1 will describe a forwardly directed arc where the rear end 52 of the lid will be raised more than the front end 51, see the arrows P₁ and P₂ in fig. 1b and fig. 1c. The front end 53 of the bottom is given a forwardly directed, sloping shape, and the front end 51 of the lid is given a corresponding backwardly directed, sloping shape. When the roof box is closed, the lid will be pulled backwards by the link arms, and during this movement the front end of the lid will grip the front end of the bottom, thus pushing the lid towards the bottom. The roof box thereby obtains a highly watertight front edge which prevents penetration of rain water.

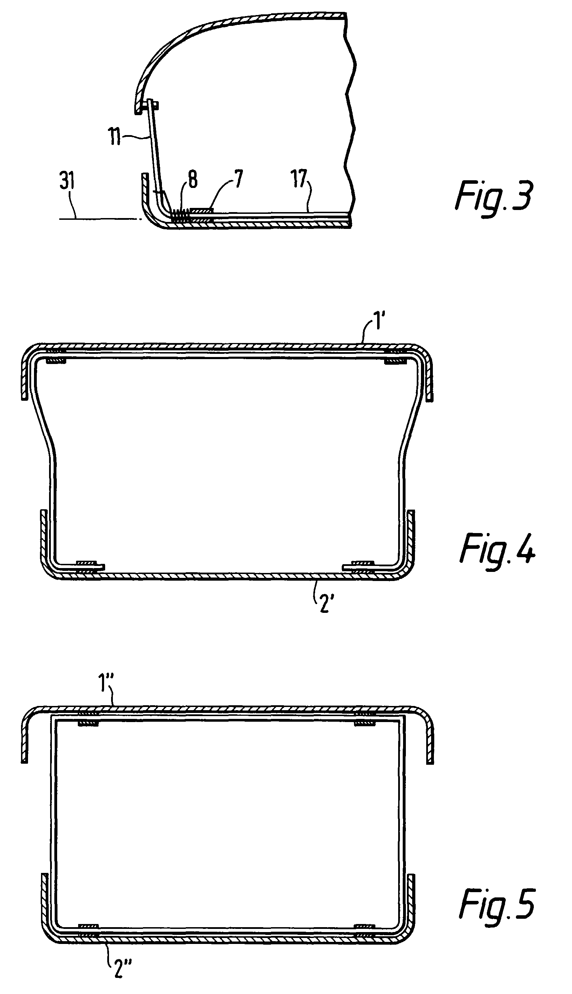

Fig. 3 illustrates in closer detail a design of the rotating fastening 7, where a helical spring 8 is arranged around the outermost section of the transverse section 17 in such a manner that the link arm 11 is pushed upwards towards an open position of the roof box. By dimensioning the spring in such a way that the spring force balances the weight of the lid, a design is thereby achieved where on opening the roof box the lid is raised by the spring or with only very little effort by the user.

Fig. 4 corresponds to fig. 2b, illustrating a design of the invention where the mechanism is employed in a box structure with lid 1' and bottom 2'. The lid 1' is flat, and the pair of link arms is in the form of a hoop with the transverse section located near the flat lid 1' and the opening in the hoop directed towards the bottom 2'.

Fig. 5 corresponds to fig. 4, with the difference that the pair of link arms has two transverse sections and is in the form of a flat, rectangular frame instead of a hoop. Both the lid 1'' and the bottom 2'' are flat, and the transverse sections are located near them.

It is thereby demonstrated that it is possible to design the pair of link arms in several ways. Regardless of the design, in most cases it will be desirable to locate the transverse section in such a manner that it causes the least possible hindrance to access to the space between the two parts which are connected by the pair of link arms, which means that it is natural to place the transverse section near a flat part.

Compared with roof boxes where the lid is attached to the bottom with hinges, an attachment of the lid with a mechanism according to the invention provides far greater freedom for the design of the seals between the lid and the bottom, with the possibility, for example, of designing the lid with an overlap along the whole edge towards the bottom. This is a great advantage, since experience with roof boxes with hinges shows that the areas around the hinges have a tendency to allow rain water to pass through, together with the fact that the hinges or the seals at the hinges can be destroyed by icing during winter use.

As described heretofore, by means of the invention it is possible to produce parts which have to be moved in relation to one another, especially lids and bottoms of roof boxes for cars, in less rigid materials and/or thinner dimensions than has been necessary in the past. Furthermore, it is possible to design the parts without or with less stiffening in the form of ribs or other reinforcements than has been necessary with the use of known mechanisms.

A particular advantage which is provided by utilising a mechanism according to the invention is the possibility of manufacturing roof boxes for cars in vacuum-formed thermoplastic. A thin-walled, light roof box is thereby obtained which, since it is made of thermoplastic, also has the major advantage of being recyclable.

In addition to the described design the invention may also be varied in a number of ways within the scope of the claims. One example of such a variation is to vary the length of the link arms and the position of the pair of link arms in the roof box. A second example is to mould the rotating fastenings in plastic, integrated in the lid and/or the bottom of the box.

## Claims

1. A mechanism for connecting two parts (1, 2), which are movable in relation to each other, comprising at least two pairs of link arms (10, 20),
wherein each pair of link arms comprises two link arms (11, 12), which are provided at a distance apart from each other and a first end (13, 15) of which is attached to one part (2) by rotating fastenings (7) for rotation about a common first axis (31), and a second end (14, 16) of which is attached to the second part (1) by rotating fastenings (9) for rotation about a common second axis (32) parallel to the first axis,
characterized in that the link arms (11, 12) in at least one of the pairs of link arms (10) are rigidly interconnected with at least one transverse section (17).

2. A mechanism according to claim 1,
characterized in that the link arms (11, 12) are rigidly interconnected with a transverse section (17) at the link arms' first ends (13, 15) and/or second ends (14, 16), the transverse sections (17) and the link arms (11, 12) thus together forming a U-shaped or channel-shaped hoop or a substantially rectangular frame respectively.

3. A mechanism according to claim 1 or 2,
characterized in that the hoop or the frame is formed from a continuously elongated element, such as a rod or a tube.

4. A mechanism according to one of the preceding claims,
characterized in that at least one of the two parts (1,2) is designed as a substantially flat or curved plate (3, 4), and may have lateral edges (5, 6), with the result that the two parts form the lid (1) and bottom (2) in a box structure, and that the transverse sections (17) are preferably provided near the plates.

5. A mechanism according to claim 4,
characterized in that the link arms' (11, 12) rotating fastenings are composed of rotating fastenings (7) attached to the plate (3) for the transverse section(s) (17) for rotation about their longitudinal direction, the transverse sections (17) preferably being composed of rods or tubes and the rotating fastenings (7) preferably being composed of sleeve-formed sections which are arranged outside the rods or the tubes.

6. A mechanism according to one of the preceding claims,
characterized in that the link arms (11, 12) are spring loaded (8).

7. A mechanism according to one of the preceding claims,
characterized in that the two parts form the lid (1) and bottom (2) in a roof box for a car, and that the mechanism is preferably composed of two pairs of link arms (10, 20), the link arms of the pairs of link arms being provided on opposite sides of the roof box.

8. A mechanism according to claim 7, where the roof box is moulded in plastic,
characterized in that the transverse sections (17) constitute stiffenings for the bottom and/or the lid.

9. A mechanism according to claim 7 or 8,
characterized in that the rotating fastenings (7) in the bottom of the roof box for at least one of the pairs of link arms (10) are placed in the immediate vicinity of or integrated with attachment devices for attaching the roof box to the car.

10. A mechanism according to one of the claims 7 to 9,
characterized in that the rotating fastenings (9) in the lid of the roof box are located at regular intervals, thus giving an even distribution in the lid of the loads on the lid (1) from the link arms (11, 12).

11. A mechanism according to one of the claims 7 to 10,
characterized in that the link arms in the front pair of link arms (20) are shorter than the link arms in the rear pair of link arms (10), with the result that when raised the movement of the lid (1) will describe a forwardly directed arc where the rear end (52) of the lid will be raised more than the front end (51).

12. A mechanism according to claim 11,
characterized in that the front end (53) of the bottom has been given a forwardly directed, sloping shape, and the front end (51) of the lid has been given a corresponding backwardly directed, oblique shape in order to be able to grip the front end of the bottom, with the result that when the roof box is closed, since the lid is pulled backwards by the link arms, the lid (1) is pushed towards the bottom (2).

13. A mechanism according to one of the claims 7 to 12,
characterized in that the rotating fastenings (7, 9) of the hoops and/or the frames in the bottom and/or the lid are integrated with the bottom or the lid respectively, preferably by simultaneous moulding.

14. A mechanism according to one of the claims 7 to 13,
characterized in that it is located in its entirety inside the roof box when the latter is closed.
